# EUROPEAN PATENT APPLICATION

(11) **EP 4 761 004 A1**
(43) Date of publication of application: **17.06.2026**
(21) Application number: 24857631.6
(22) Date of filing: 18.02.2024
(51) Int. Cl.: H01R 13/52

(54) **PHOTOVOLTAIC CONNECTOR AND INVERTER**

(30) Priority: 29.08.2023 CN 202311103524
(71) Applicant: Huawei Digital Power Technologies Co., Ltd., Shenzhen, Guangdong 518043 (CN)
(72) Inventor: LI, Maofan, Shenzhen, Guangdong 518043 (CN); MIN, Jingluo, Shenzhen, Guangdong 518043 (CN); CHEN, Taihe, Shenzhen, Guangdong 518043 (CN)
(74) Representative: Gill Jennings & Every LLP
(86) International application number: PCT/CN2024/077454
(87) International publication number: WO 2025/044075

(57) **Abstract**

A photovoltaic connector and an inverter are provided. The photovoltaic connector includes a case, a cover body, and a terminal. The case and the cover body are enclosed to form a first receptacle, the cover body is provided with a first concave portion, the case is provided with a first through hole, a part of the terminal is located in the first receptacle, and a part of the terminal extends out of the first receptacle through the first through hole; and the case is further provided with a second concave portion, and the first concave portion and the second concave portion are enclosed to form a second through hole communicating with the first receptacle. A first sealing kit is disposed on a surface that is of the cover body and that faces the case, the first sealing kit is connected to the case, the first sealing kit includes a first sealing body and a first wrapping portion that are connected, and the first wrapping portion is disposed on the first concave portion. A second sealing kit is disposed on a surface that is of the case and that faces the cover body, the second sealing kit is connected to the cover body, the second sealing kit includes a second sealing body and a second wrapping portion that are connected, the second wrapping portion is disposed on the second concave portion, and the first wrapping portion and the second wrapping portion are enclosed to form a sealing structure used to wrap a cable.

## Description

This application claims priority to Chinese Patent Application No. 202311103524.9, filed with the China National Intellectual Property Administration on August 29, 2023 and entitled "PHOTOVOLTAIC CONNECTOR AND INVERTER", which is incorporated herein by reference in its entirety.

### TECHNICAL FIELD

This application relates to the photovoltaic energy field, and in particular, to a photovoltaic connector and an inverter.

### BACKGROUND

An inverter is connected to an external device through a cable. Ajunction box is usually disposed on one side of a box body of the inverter, and the cable extends into the junction box, and is electrically connected to the inverter, to protect the cable and facilitate a connection between the cable and components in the inverter.

At present, a common junction box has low sealing performance, and rainwater easily enters the junction box. Therefore, an inverter is not suitable for an outdoor application.

### SUMMARY

A technical problem to be resolved in embodiments of this application is to provide a photovoltaic connector with high sealing performance and an inverter.

According to a first aspect, this application discloses a photovoltaic connector, including a case, a cover body, and a terminal, where the case and the cover body are enclosed to form a first receptacle, the cover body is provided with a first concave portion, the case is provided with a first through hole, a part of the terminal is located in the first receptacle, and a part of the terminal extends out of the first receptacle through the first through hole; and the case is further provided with a second concave portion, and the first concave portion and the second concave portion are enclosed to form a second through hole communicating with the first receptacle;
a first sealing kit is disposed on a surface that is of the cover body and that faces the case, the first sealing kit is connected to the case, the first sealing kit includes a first sealing body and a first wrapping portion that are connected, and the first wrapping portion is disposed on the first concave portion; and
a second sealing kit is disposed on a surface that is of the case and that faces the cover body, the second sealing kit is connected to the cover body, the second sealing kit includes a second sealing body and a second wrapping portion that are connected, the second wrapping portion is disposed on the second concave portion, the first wrapping portion and the second wrapping portion are enclosed to form a sealing structure used to wrap a cable, and the cable is configured to extend into the first receptacle from the second through hole, to connect to the terminal.

The first sealing kit is in a sealed connection to an inner surface of the case and the cover body, and the second sealing kit is in a sealed connection to an inner surface of the cover body and the case. This achieves double sealing effect, and improves waterproof performance of the photovoltaic connector. The first sealing kit and the second sealing kit can prevent substances such as water and dust outside the photovoltaic connector from entering the first receptacle through a gap between the cover body and the case. The first wrapping portion is closely connected to the first concave portion, the second wrapping portion is closely connected to the second concave portion, and the first wrapping portion and the second wrapping portion can form the sealing structure used to wrap the cable, so that the cable, the cover body, and the case are connected more tightly, sealing performance of the photovoltaic connector is improved, waterproof and dustproof performance of the photovoltaic connector is improved, and the substances such as water and dust outside the photovoltaic connector are prevented from entering the first receptacle through the second through hole. In addition, the terminal is fastened to the case, the terminal is integrated with the case, and the cable can be connected to the terminal of the photovoltaic connector outside the box body. This reduces a difficulty of connecting the terminal and the cable, and facilitates a manual operation of a user. The terminal and the case can be connected into an integrated structure by using an injection molding process. This simplifies a structure of the photovoltaic connector, and reduces manufacturing costs of the inverter.

With reference to the first aspect, in a possible implementation, the case includes a bottom wall and a first side wall surrounding the bottom wall, the first side wall is connected to an inner surface of the bottom wall, a boss protrudes from an outer surface of the first side wall, and the boss surrounds the first side wall; and
the cover body includes a top wall and a second side wall surrounding the top wall, the second side wall is connected to an inner surface of the top wall, the inner surface of the top wall is closely connected, via the first sealing body, to an end face that is of the first side wall and that faces away from the bottom wall, and an end face that is of the second side wall and that faces away from the top wall is connected to an end face of the boss.

Because the second side wall is connected to the inner surface of the top wall, the second side wall definitely has a size that protrudes from the inner surface of the top wall. The second side wall is connected to the end face of the boss. Because the first side wall is connected to the inner surface of the top wall via the first sealing body, it may be learned that the end face of the boss and an end face that is of the first side wall and that is away from the bottom wall are not in a same plane, and the end face that is of the first side wall and that is away from the bottom wall protrudes from the end face of the boss. When the photovoltaic connector is exposed to rainwater outdoors, it is difficult for the rainwater to penetrate two sealing structures located on different planes and enter the first receptacle. It should be noted that, when the photovoltaic connector is exposed to rainwater outdoors, because the boss is located on a periphery of the first side wall, the rainwater first needs to penetrate a sealing structure including the second side wall and the end face of the boss, to enter the first receptacle and because the end face of the boss and the end face that is of the first side wall and that is away from the bottom wall are not in the same plane, it is difficult for a small amount of rain water penetrating the second side wall and the end face of the boss to contact the first sealing kit. This can greatly improve waterproof and dustproof performance of the photovoltaic connector.

With reference to the first aspect, in a possible implementation, the photovoltaic connector further includes a third side wall connected to the inner surface of the top wall, the third side wall surrounds the first side wall, the third side wall is located in encirclement of the second side wall, there is a gap between the third side wall and the second side wall, and an end face that is of the third side wall and that faces away from the top wall is closely connected to the end face of the boss via the second sealing body.

The end face that is of the third side wall and that faces away from the top wall is closely in contact with the end face of the boss, and when the substances such as water or dust enter the first receptacle from outside the photovoltaic connector, a triple sealing protection line of the photovoltaic connector needs to be performed. A first sealing protection line is that the end face that is of the second side wall and that faces away from the top wall is in a sealed connection to the end face of the boss, to prevent the substances such as water or dust from entering the first receptacle. A second sealing protection line is that the second sealing kit is connected between the end face of the second side wall and the end face of the boss, to prevent the substances such as water and dust from entering the first receptacle. A third protection line is that the first sealing kit is connected between the inner surface of the first side wall and the inner surface of the top wall, to prevent the substances such as water and dust from entering the first receptacle. This improves sealing performance of the photovoltaic connector.

With reference to the first aspect, in a possible implementation, a first trench is disposed on the inner surface of the top wall, the first trench accommodates the first sealing body, and the first sealing body is in contact with a surface that is of the third side wall and that faces away from the second side wall. The first trench can limit the first sealing kit, and the first sealing kit is in contact with the third side wall. This can improve sealing performance of the photovoltaic connector.

With reference to the first aspect, in a possible implementation, a second trench is disposed on the end face of the boss, the second trench accommodates the second sealing body, and the second sealing body is in contact with a surface that is of the first side wall and that faces away from the first receptacle. The second trench can limit the second sealing kit, and the second sealing kit is in contact with the first side wall. This can improve sealing performance of the photovoltaic connector. The first sealing kit is closely connected to the end face that is of the first side wall and that is away from the bottom wall, and is in contact with a surface that is of the third side wall and that faces away from the second side wall, the second sealing kit is closely in contact with an end face that is of the third side wall and that faces away from the top wall, and the second sealing kit is closely in contact with the first side wall. It can be learned that the first sealing kit, the second sealing kit, the first side wall, and the third side wall can be enclosed to form sealing space, the sealing space can improve sealing performance between the case and the cover body, and further improve waterproof and dustproof performance of the photovoltaic connector.

With reference to the first aspect, in a possible implementation, the first wrapping portion includes a first connection portion and a plurality of first wrapping layers spaced from each other along a radial direction of the second through hole, and the first connection portion is connected to the plurality of first wrapping layers. The plurality of first wrapping layers in the first wrapping portion can be torn off layer by layer, so that the sealing structure including the first wrapping portion and the second wrapping portion easily adapts to a diameter of the cable.

With reference to the first aspect, in a possible implementation, the second wrapping portion includes a second connection portion and a plurality of second wrapping layers spaced from each other along a radial direction of the second through hole, the second connection portion is connected to the plurality of second wrapping layers, and the first wrapping layer and the second wrapping layer are disposed opposite to each other, to wrap the cable. The second wrapping layer can be torn off, so that the sealing structure enclosed by the second wrapping portion can adapt to cables of different diameters. Specifically, if the cable of the cable is large, and the first wrapping portion and the second wrapping portion cannot wrap the cable, one or more first wrapping layers may be torn off from the first wrapping portion. In this case, one or more second wrapping layers may be torn off from the second wrapping portion, to tightly wrap the cable. Generally, a quantity of first wrapping layers torn off from the first wrapping portion is the same as a quantity of second wrapping layers torn off from the second wrapping portion. Several first wrapping layers are to be torn off from the first wrapping portion and/or several second wrapping layers are to be torn off from the second wrapping portion, to adapt to wrapping cables of different diameter sizes.

With reference to the first aspect, in a possible implementation, the first through hole is disposed on the bottom wall, a plug portion surrounding the first through hole protrudes from a surface that is of the bottom wall and that faces away from the first receptacle, a second receptacle is disposed on the plug portion, the first through hole communicates with the first receptacle and the second receptacle, and a part that is of the terminal and that extends out of the first receptacle is located in the second receptacle.

The plug portion can protect the terminal that extends out of the first receptacle, the plug portion can be in plug-in matching to a through groove in the box body, a structure of the plug portion adapts to a structure of the through groove, the plug portion can extend into the accommodating cavity through the through groove, and a part that is of the terminal and that is located in the second receptacle can be electrically connected to the circuit board in the accommodating cavity through the through groove. This facilitates assembly of the photovoltaic connector and the box body.

With reference to the first aspect, in a possible implementation, a third trench surrounding the plug portion is disposed on a surface that is of the bottom wall and that faces away from the cover body, a third sealing kit is disposed on the third trench, and the third sealing kit is in contact with a surface that is of the plug portion and that faces away from the second receptacle. The third sealing kit can be closely in contact with the outer surface of the box body. This can improve sealing performance between the photovoltaic connector and the box body. The third sealing kit can prevent substances such as water and dust from entering the first receptacle, and can also prevent substances such as water and dust from entering the accommodating cavity of the box body. The third trench can limit the third sealing kit, and improve connection stability between the third sealing kit and the case.

With reference to the first aspect, in a possible implementation, the photovoltaic connector further includes a fourth sealing kit, the fourth sealing kit is fastened to the surface that is of the bottom wall and that faces away from the cover body, and the fourth sealing kit surrounds the third sealing kit. The fourth sealing kit can improve a tighter connection between the first bottom wall and the box body, and can further improve sealing performance of the photovoltaic connector and the box body. The fourth sealing kit can prevent substances such as water and dust from entering the first receptacle, and can also prevent substances such as water and dust from entering the accommodating cavity of the box body.

With reference to the first aspect, in a possible implementation, a mounting table protrudes from a surface that is of the bottom wall and that faces the cover body, and a part that is of the terminal and that is located in the first receptacle is fastened to the mounting table. The mounting table is configured to be fastened to the terminal, so that the terminal can be stably fastened in the first receptacle.

With reference to the first aspect, in a possible implementation, a protrusion is disposed on the second side wall, a first hinge hole is disposed on the protrusion, a groove is disposed on the end face of the boss, a second hinge hole communicating with the groove is disposed on the boss, the protrusion extends into the groove, and a pin passes through the first hinge hole and the second hinge hole. The pin is inserted into the first hinge hole and the second hinge hole, the cover body is hinged to the case, and the cover body may be turned over relative to the case. When the cable is connected to the terminal, the cover body may be turned over to be in an open state, and the cable can directly extend into the first receptacle to connect to the terminal, so that the cable and the terminal are easy to connect. After the cable is connected to the terminal, the cover body is turned over to close the cover body, so that the cover body can be in a sealed connection to the case. This facilitates a process of connecting the photovoltaic connector to the cable is very convenient.

With reference to the first aspect, in a possible implementation, the end face that is of the second side wall and that faces away from the top wall is concave in a direction away from the boss, to form a drainage groove, and the drainage groove communicates with the gap between the second side wall and the third side wall. The drainage groove can discharge accumulated water between the second side wall and the third side wall. This reduces a possibility that accumulated water penetrates into the first receptacle. For example, the photovoltaic connector can be used outdoors. When rain or the like occurs outdoors, although the end face that is of the second side wall and that faces away from the top wall is in a sealed connection to the end face of the boss, rainwater may still enter the gap between the second side wall and the third side wall from the gap between the second side wall and the end face of the boss. Water accumulated in the gap between the second side wall and the third side wall is discharged via the drainage groove, to reduce a possibility that sealing performance of the second sealing kit is affected due to water accumulated in the gap between the second side wall and the third side wall, so as to improve waterproof performance of the photovoltaic connector.

With reference to the first aspect, in a possible implementation, a protruding column protrudes from the inner surface of the top wall, the protruding column is located in the gap between the second side wall and the third side wall, an end face that is of the protruding column and that faces away from the top wall abuts against the end face of the boss, a first fastening hole penetrating the top wall and the protruding column is disposed on the cover body, and a second fastening hole corresponding to the first fastening hole is disposed on the boss; and, a fastener passes through the first fastening hole, and the fastener extends into the second fastening hole. The cover body and the case can be fastened via the fastener, where the protruding column is provided with a first fastening hole for the fastener to pass through, and the protruding column is provided between the second side wall and the third side wall. Because the protruding column is provided between the second side wall and the third side wall, space of the cover body occupied by matching the fastener and the first fastening hole of the protruding column can be saved; and because the boss is provided with the second fastening hole matched to the fastener, additional space occupied by the fastener matched to the case can be saved.

According to a second aspect, this application discloses an inverter, where the inverter includes a box body, a circuit board, and the photovoltaic connector according to the first aspect, the box body has an accommodating cavity and a through groove communicating with the accommodating cavity, the accommodating cavity accommodates the circuit board, a case of the photovoltaic connector is located outside the box body, and a terminal of the photovoltaic connector extends into the accommodating cavity through the through groove, and is electrically connected to the circuit board.

### BRIEF DESCRIPTION OF DRAWINGS

To describe technical solutions in embodiments of this application or in the background more clearly, the following briefly describes the accompanying drawings for describing embodiments of this application or the background.
FIG. 1 is a diagram of a structure of a photovoltaic system used in a home power station according to an embodiment of this application;
FIG. 2 is a diagram of a structure of a photovoltaic system used in an industrial photovoltaic power station according to an embodiment of this application;
FIG. 3 is a diagram of a three-dimensional structure of an inverter according to an embodiment of this application;
FIG. 4 is an exploded view of the inverter in FIG. 3;
FIG. 5 is a diagram of a three-dimensional structure of a photovoltaic connector according to an embodiment of this application;
FIG. 6 is a schematic exploded diagram of the photovoltaic connector in FIG. 5;
FIG. 7 is another schematic exploded diagram of the photovoltaic connector in FIG. 5;
FIG. 8 is still another schematic exploded diagram of the photovoltaic connector in FIG. 5;
FIG. 9 is yet another schematic exploded diagram of the photovoltaic connector in FIG. 5;
FIG. 10 is a diagram of a three-dimensional structure of a cover body according to an embodiment of this application;
FIG. 11 is still yet another schematic exploded diagram of the photovoltaic connector in FIG. 5;
FIG. 12 is a further schematic exploded diagram of the photovoltaic connector in FIG. 5;
FIG. 13 is a diagram of a three-dimensional structure of a case according to an embodiment of this application;
FIG. 14 is a diagram of a three-dimensional structure of the case in FIG. 13 from another perspective;
FIG. 15 is a diagram of a three-dimensional structure of a first sealing kit according to an embodiment of this application; and
FIG. 16 is a diagram of a three-dimensional structure of a second sealing kit according to an embodiment of this application.

Descriptions of reference numerals:
1. box-type transformer; 2. power distribution room; 3. smart array controller; 1000. inverter; 20. photovoltaic module; 30. grid-tied/off-grid controller; 40. power-consuming device; 50. power sensor; 60. power grid; 70. energy storage system; 80. photovoltaic optimizer; 90. combiner box; 1000. inverter; 1100. box body; 1110. accommodating cavity; 1120. through groove; 1200. circuit board; 1300. photovoltaic connector; 1300a. second through hole; 100. case; 110. bottom wall; 110a. first spacer plate; 110b. blocking element; 111. first through hole; 112. plug portion; 112a. second receptacle; 112b. second spacer plate; 113. third trench; 114. third sealing kit; 115. fourth sealing kit; 116. mounting table; 120. first side wall; 130. first receptacle; 140. boss; 141. second trench; 142. second fastening hole; 143. groove; 144. second hinge hole; 145. pin; 150. second concave portion; 100b. fastener; 200. terminal; 300. cover body; 310. top wall; 311. first trench; 312. protruding column; 313. limiting rib; 320. second side wall; 321. protrusion; 321a. first hinge hole; 322. drainage groove; 330. third side wall; 300a. first fastening hole; 340. first concave portion; 350. reinforcing rib; 400. first sealing kit; 410. first sealing body; 420. first wrapping portion; 421. first connection portion; 422. first wrapping layer; 500. second sealing kit; 510. second sealing body; 520. second wrapping portion; 521. second connection portion; 522. second wrapping layer; 600. cable.

### DESCRIPTION OF EMBODIMENTS

To make the objectives, technical solutions, and advantages of this application clearer, the following further describes this application in detail with reference to the accompanying drawings.

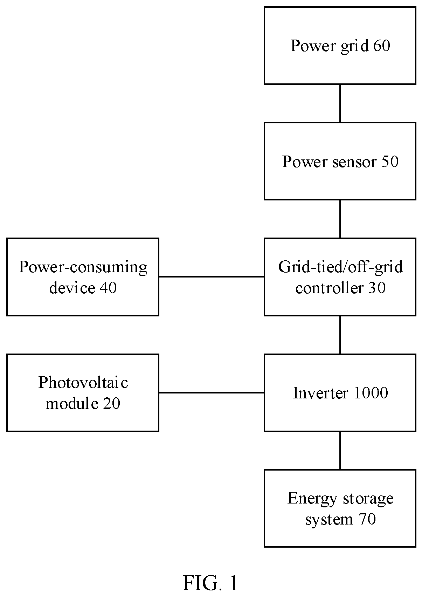

FIG. 1 is a diagram of a structure of a photovoltaic system used in a home power station according to an embodiment of this application. In an implementation, the photovoltaic system includes an inverter 1000, a photovoltaic module 20, a grid-tied/off-grid controller 30, a power-consuming device 40, a power sensor 50, a power grid 60, and an energy storage system 70.

A photovoltaic optimizer is mounted on the photovoltaic module 20, and the photovoltaic module 20 is configured to convert light energy into electric energy. The photovoltaic optimizer is configured to improve performance ratio of the photovoltaic module 20. The photovoltaic optimizer is a module-level power electronic device that has a direct current input and a direct current output. By connecting to the photovoltaic module 20 in series, the photovoltaic optimizer ensures that the module keeps being in an optimal operating state by using a predictive current and voltage technology. According to an operating principle of a buck topology, the photovoltaic optimizer is used to resolve a problem of an impact on an energy yield of a photovoltaic power station due to shadow shading, inconsistent directions, or different electrical specifications of the module. This implements a maximum power output of the module and improves an energy yield of the system.

The photovoltaic module 20 is electrically connected to the inverter 1000, and the photovoltaic module 20 transmits a direct current to the inverter 1000. The inverter 1000 is electrically connected to the energy storage system 70 and the grid-tied/off-grid controller 30 separately.

In an implementation, the inverter 1000 has a direct current conversion functional module. The direct current conversion functional module of the inverter 1000 may be configured to convert a direct current generated by the inverter 1000 into a voltage required for energy storage of the energy storage system 70, and transmit the voltage to the energy storage system 70 for energy storage.

In an implementation, the inverter 1000 may convert the direct current provided by the photovoltaic module 20 into an alternating current, and transmit the alternating current to the grid-tied/off-grid controller 30. The grid-tied/off-grid controller 30 is electrically connected to the power-consuming device 40, and may be electrically connected to the power grid 60. In an actual application scenario, the grid-tied/off-grid controller 30 has an off-grid state and a grid-tied state.

When the grid-tied/off-grid controller 30 is in the off-grid state, there is no electrical connection relationship between the grid-tied/off-grid controller 30 and the power grid 60, and the alternating current transmitted by the inverter 1000 is provided only for the power-consuming device 40. The power-consuming device 40 includes household appliances such as a television set, a refrigerator, and a washing machine.

When the grid-tied/off-grid controller 30 is in the grid-tied state, the grid-tied/off-grid controller 30 is electrically connected to the power grid 60 via the power sensor 50. When the electric energy generated by the photovoltaic module 20 cannot meet a power consumption requirement of the power-consuming device 40, the power grid 60 may supply electric energy to the photovoltaic system via the grid-tied/off-grid controller 30. When an energy yield generated by the photovoltaic module 20 exceeds electric quantities used by the power-consuming device 40, the grid-tied/off-grid controller 30 may transfer redundant electric quantities to the power grid 60. The power sensor 50 is configured to measure a power flow status between the photovoltaic system and the power grid 60. For example, the power sensor 50 may be an electricity meter.

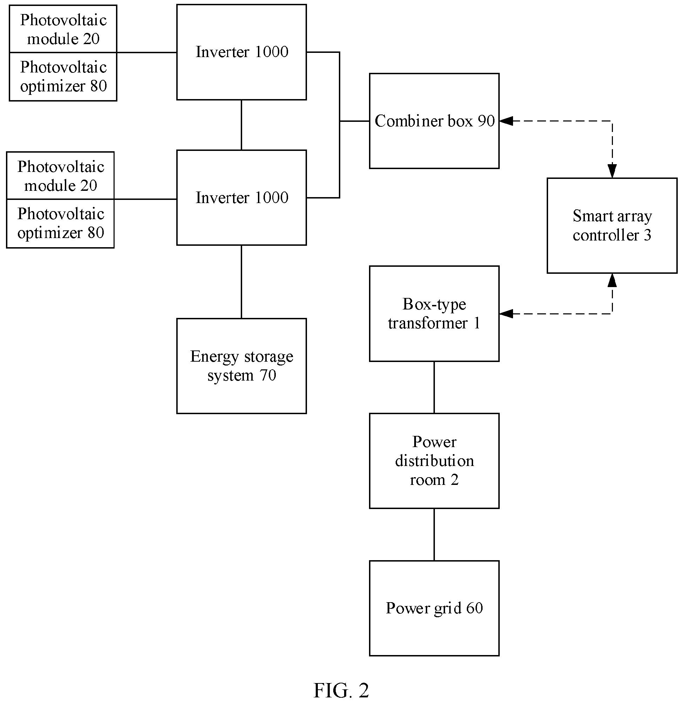

FIG. 2 is a diagram of a structure of a photovoltaic system used in an industrial photovoltaic power station according to an embodiment of this application. In an implementation, the photovoltaic system includes a box-type transformer 1, a smart array controller 3, inverters 1000, photovoltaic modules 20, an energy storage system 70, photovoltaic optimizers 80, and a combiner box 90.

The photovoltaic optimizer 80 is mounted on the photovoltaic module 20, the photovoltaic module 20 is configured to convert light energy into electric energy, and the photovoltaic optimizer 80 is configured to improve performance ratio of the photovoltaic module 20.

In some implementations, the photovoltaic system may include a plurality of photovoltaic modules 20 and photovoltaic optimizers 80. Each of the plurality of photovoltaic modules 20 is electrically connected to one inverter 1000.

In an implementation, the inverter 1000 is connected to the energy storage system 70, and is configured to store a direct current generated through photovoltaic inversion. In an implementation, a direct current combiner box (not shown in FIG. 2) is provided between the plurality of inverters 1000 and the energy storage system 70, and is configured to combine direct currents generated by the plurality of inverters 1000 and transmit a combined direct current to the energy storage system 70 for storage. It may be understood that, a direct current conversion functional module that can convert a direct current generated by the photovoltaic module 20 into a direct current that can be stored by the energy storage system 70 may be disposed in the inverter 1000.

The combiner box 90 shown in FIG. 2 is an alternating current combiner box, and the alternating current combiner box is configured to aggregate and transmit alternating currents generated by the plurality of inverters 1000 to the box-type transformer 1. The box-type transformer 1 is configured to convert a voltage of an alternating current generated by the inverter 1000, and then transmit a voltage obtained through conversion to the power grid 60 in a power distribution room 2. There is signal transmission (dashed lines in the FIG. 2) between the smart array controller 3 and at least one of the combiner box 90, the box-type transformer 1, the inverter 1000, and an environmental monitoring instrument (not shown in the figure). The smart array controller 3 is configured to implement communication control on the photovoltaic system.

It should be noted that FIG. 1 and FIG. 2 only show application scenarios of a photovoltaic system in the home power station and the industrial photovoltaic power station, and do not represent a structure, a size, and a location relationship of a device in the photovoltaic system. A person skilled in the art may perform adjustment according to an actual requirement.

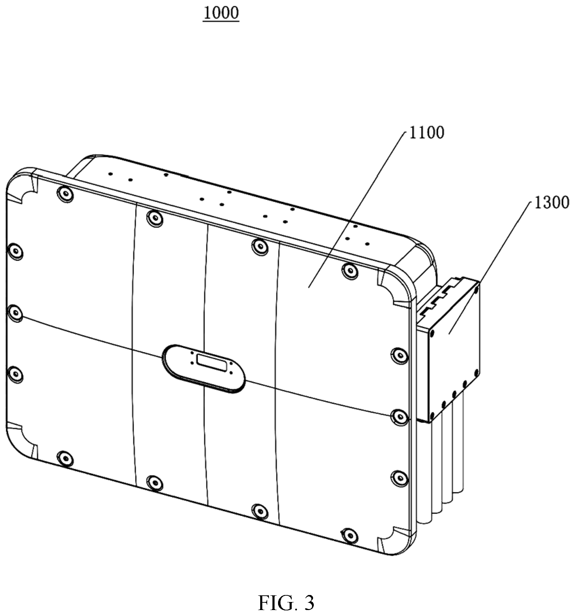

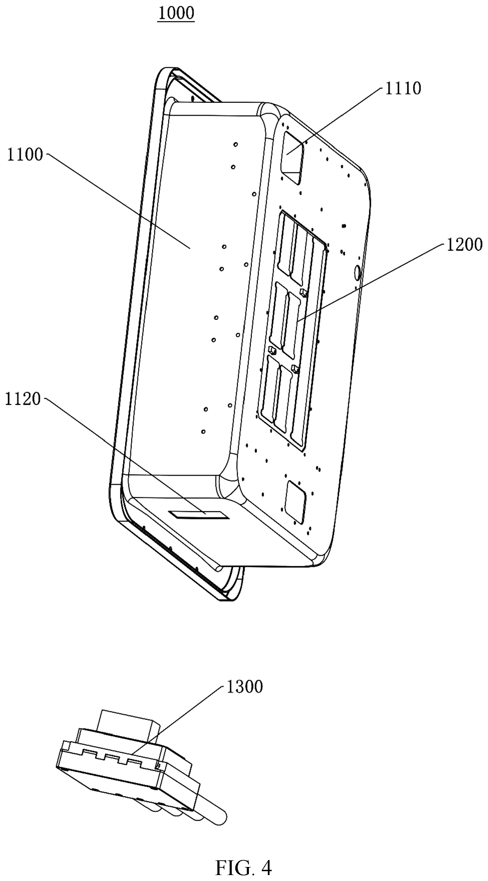

As shown in FIG. 3 and FIG. 4, this application discloses an inverter 1000. The inverter 1000 includes a box body 1100, a circuit board 1200, and a photovoltaic connector 1300. The box body 1100 has an accommodating cavity 1110 and a through groove 1120. The through groove 1120 connects an outer surface of the box body 1100 and an inner surface of the box body 1100, so that the through groove 1120 can communicate with the accommodating cavity 1110. The accommodating cavity 1110 is configured to accommodate the circuit board 1200. The photovoltaic connector 1300 is fastened to the outer surface of the box body 1100, and a terminal of the photovoltaic connector 1300 extends into the accommodating cavity 1110 and is electrically connected to the circuit board 1200. The photovoltaic connector 1300 is fastened to the outer surface of the box body 1100 of the inverter 1000, so that a cable can be connected to the photovoltaic connector 1300. The cable 600 does not need to extend into the accommodating cavity 1110 of the box body 1100 to be electrically connected to the circuit board 1200, which facilitates a connection between the inverter 1000 and the cable, and shortens assembly time of the inverter 1000.

In this application, the inverter 1000 can convert a direct current into an alternating current, and transmit the alternating current to a load or a power grid 60 via the photovoltaic connector 1300. In a possible implementation, the circuit board 1200 is electrically connected to a photovoltaic module, the photovoltaic module converts light energy into a direct current, and the circuit board 1200 converts the direct current into an alternating current, and then transmits the alternating current to the load or the power grid via the photovoltaic connector 1300.

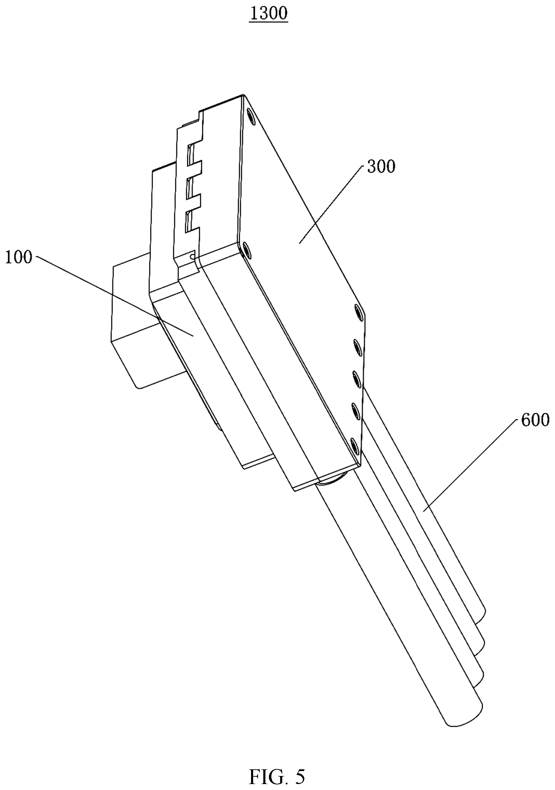

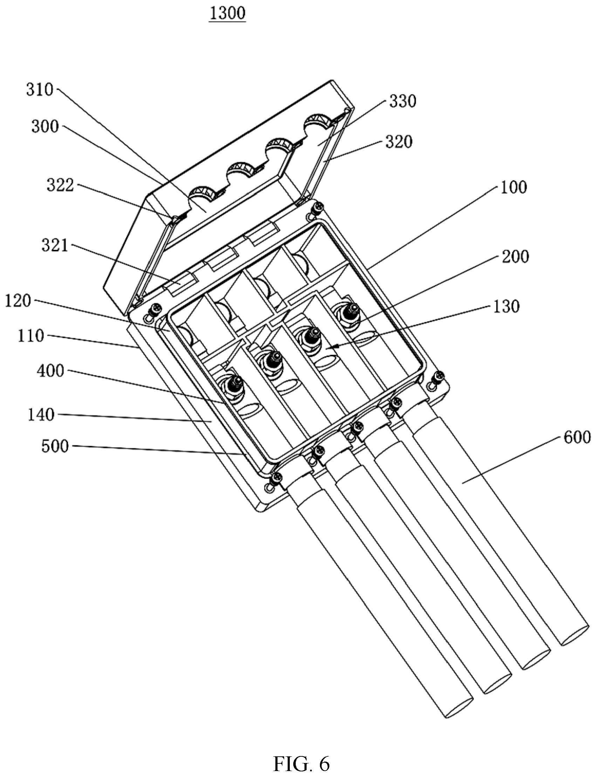

As shown in FIG. 5 to FIG. 7, the photovoltaic connector 1300 includes a case 100, a cover body 300, and terminals 200. The case 100 and the cover body 300 are enclosed to form a first receptacle 130. The case 100 is provided with a first through hole that passes through an inner surface of the case 100 and an outer surface of the case 100, and the terminal 200 passes through the first through hole. A part of the terminal 200 is located in the first receptacle 130, and a part of the terminal 200 extends out of the first receptacle 130 through the first through hole. It may be understood that the part that is of the terminal 200 and that is located outside the first receptacle 130 protrudes from the outer surface of the case 100. The terminal 200 is fastened to the case 100, the terminal 200 is integrated with the case 100, and a cable 600 can be connected to the terminal 200 of the photovoltaic connector 1300 outside the box body 1100. This reduces a difficulty of connecting the terminal 200 and the cable 600, and facilitates a manual operation of a user. The terminal 200 and the case 100 can be connected into an integrated structure by using an injection molding process. This simplifies a structure of the photovoltaic connector 1300, and reduces manufacturing costs of the inverter 1000.

A first sealing kit 400 is disposed on a surface that is of the cover body 300 and that faces the case 100, and the first sealing kit 400 is connected to the case 100. It may be understood that the first sealing kit 400 is connected between the cover body 300 and the case 100 to seal the cover body 300 and the case 100. The first sealing kit 400 can prevent substances such as water and dust outside the photovoltaic connector 1300 from entering the first receptacle 130.

A second sealing kit 500 is disposed on a surface that is of the case 100 and that faces the cover body 300, and the second sealing kit 500 is connected to the cover body 300. It may be understood that the second sealing kit 500 is also connected between the cover body 300 and the case 100 to seal the cover body 300 and the case 100. The second sealing kit 500 can also prevent substances such as water and dust outside the photovoltaic connector 1300 from entering the first receptacle 130.

The first sealing kit 400 is in a sealed connection to the inner surface of the case 100 and the cover body 300, and the second sealing kit 500 is in a sealed connection to an inner surface of the cover body 300 and the case 100. This achieves double sealing effect, and improves waterproof and dustproof performance of the photovoltaic connector 1300.

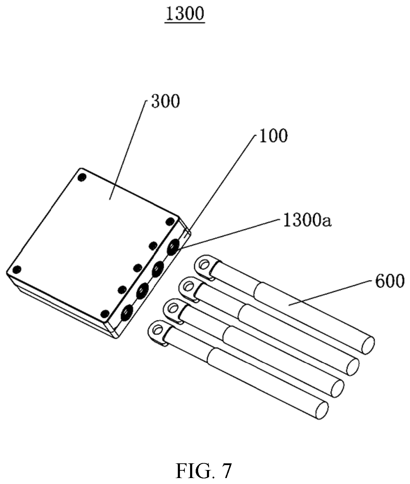

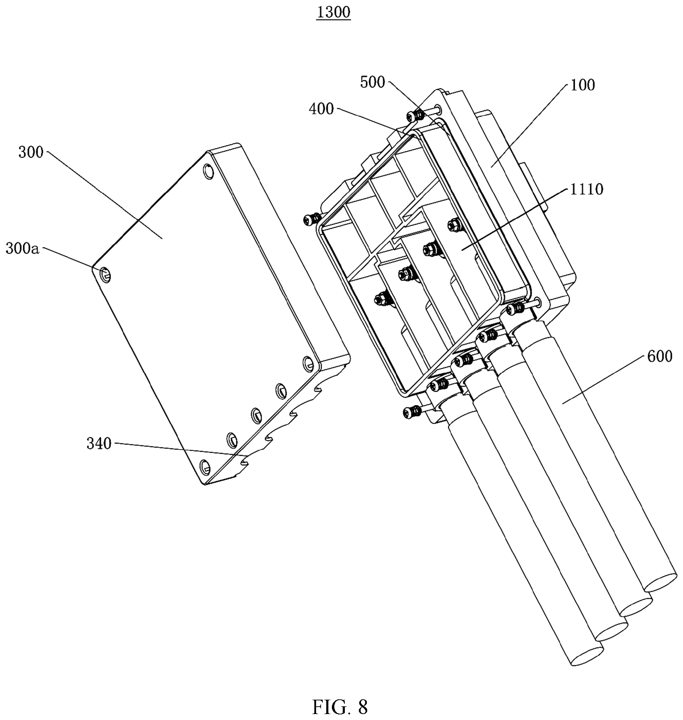

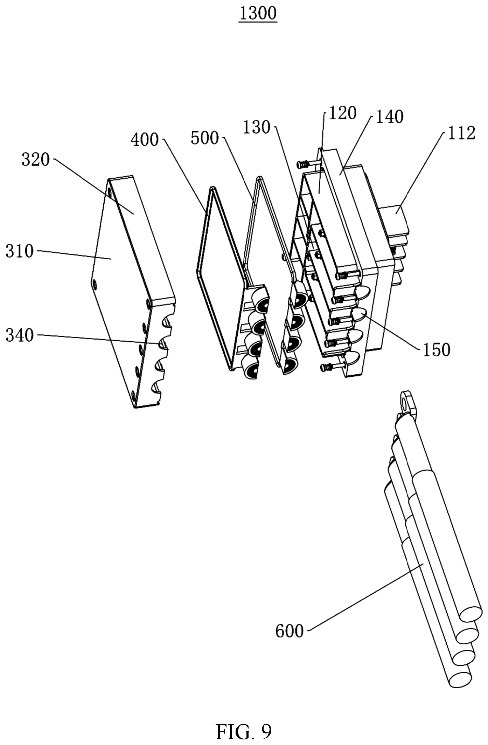

As shown in FIG. 7, FIG. 8, and FIG. 9, a first concave portion 340 is disposed on the cover body 300, a second concave portion 150 is disposed on the cover body 300, the first concave portion 340 and the second concave portion 150 are disposed opposite to each other and enclosed to form a second through hole 1300a, and the second through hole 1300a communicates with the first receptacle 130. The cable 600 can pass through the second through hole 1300a and enter the first receptacle 130, to be electrically connected to the terminal 200.

The first sealing kit 400 includes a first sealing body and a first wrapping portion. The first sealing body and the first wrapping portion are connected as a whole, and the first wrapping portion is disposed on the first concave portion.

The second sealing kit 500 includes a second sealing body and a second wrapping portion. The second sealing body and the second wrapping portion are connected as a whole, and the second wrapping portion is disposed on the second concave portion 150.

A first wrapping portion 420 and a second wrapping portion 520 are disposed opposite to each other to form a sealing structure that can wrap the cable 600. Specifically, the first wrapping portion 420 is closely in contact with the first concave portion 340, the second wrapping portion 520 is closely in contact with the second concave portion 150, and the first wrapping portion 420 and the second wrapping portion 520 match to wrap the cable 600. This can prevent water and dust outside the photovoltaic connector 1300 from entering the first receptacle 130, to improve waterproof and dustproof performance of the photovoltaic connector 1300. The first sealing kit 400 and the second sealing kit 500 each may be a sealing rubber strip enclosed in a circle, and the first wrapping portion and the second wrapping portion each may be a silicone rubber sealing block that can be deformed.

In this application, the case 100 includes a bottom wall and a first side wall 120 surrounding the bottom wall. The first side wall 120 is connected to an inner surface of the bottom wall, and the inner surface of the bottom wall belongs to or is a surface that is of the case 100 and that faces the cover body 300. A first through hole 111 is disposed on the bottom wall, and the first through hole 111 penetrates an outer surface of the bottom wall and the inner surface of the bottom wall, where the outer surface of the bottom wall is a surface that is of the bottom wall and that faces away from the cover body 300.

A boss 140 protrudes from an outer surface of the first side wall 120, the outer surface of the first side wall 120 is a surface that is of the first side wall 120 and that faces away from the first receptacle 130, and the boss 140 surrounds the first side wall 120. An end face of the boss 140 faces the cover body 300, and the first side wall 120 protrudes from the end face of the boss 140 in a direction close to the cover body 300.

The cover body 300 includes a top wall 310 and a second side wall 320 surrounding the top wall 310. The second side wall 320 is connected to an inner surface of the top wall 310. The inner surface of the top wall 310 is closely connected, via the first sealing body 410, to an end face that is of the first side wall 120 and that faces away from the bottom wall 110. An end face that is of the second side wall 320 and that faces away from the top wall 310 is connected to the end face of the boss 140.

It should be noted that an end face of the boss 140 is a flange plane, the end face of the boss 140 is smoothly disposed, and the end face that is of the second side wall 320 and that faces away from the top wall 310 is closely in contact with the end face of the boss 140. This can improve sealing performance of the case 100 and the cover body 300, the photovoltaic connector 1300 achieves triple sealing effect, and this improves waterproof and dustproof performance of the photovoltaic connector 1300.

Because the second side wall 320 is connected to the inner surface of the top wall 310, the second side wall 320 definitely has a size that protrudes from the inner surface of the top wall 310. The second side wall 320 is connected to the end face of the boss 140. Because the first side wall 120 is connected to the inner surface of the top wall 310 via the first sealing body 410, it may be learned that the end face of the boss 140 and an end face that is of the first side wall 120 and that is away from the bottom wall 110 are not in a same plane, and the end face that is of the first side wall 120 and that is away from the bottom wall 110 protrudes from the end face of the boss 140. When the photovoltaic connector 1300 is exposed to rainwater outdoors, it is difficult for the rainwater to penetrate two sealing structures located on different planes and enter the first receptacle 130. It should be noted that, when the photovoltaic connector 1300 is exposed to rainwater outdoors, because the boss 140 is located on a periphery of the first side wall 120, the rainwater first needs to penetrate a sealing structure including the second side wall 320 and the end face of the boss 140, to enter the first receptacle 130; and because the end face of the boss 140 and the end face that is of the first side wall 120 and that is away from the bottom wall 110 are not in the same plane, it is difficult for a small amount of rainwater penetrating the second side wall 320 and the end face of the boss 140 to contact the first sealing kit 400. This can improve waterproof performance of the photovoltaic connector 1300.

The cover body 300 further includes a third side wall connected to the inner surface of the top wall 310, where the third side wall surrounds the first side wall 120; and the third side wall is located in encirclement of the second side wall 320, there is a gap between the third side wall and the second side wall 320, and an end face that is of the third side wall and that faces away from the top wall 310 is closely connected to the end face of the boss 140 via a second sealing body 510. Specifically, the end face that is of the first side wall 120 and that faces away from the bottom wall 110 is in a sealed connection to the inner surface of the top wall 310 via the first sealing kit 400, and the end face that is of the second side wall 320 and that faces away from the top wall 310 is in a sealed connection to the end face of the boss 140 via the second sealing kit 500. The second side wall 320 is located on a periphery of the first side wall 120, there is a gap between an inner surface of the second side wall 320 and the outer surface of the first side wall 120, and a third side wall 330 is located in the gap between the inner surface of the second side wall 320 and the outer surface of the first side wall 120. The first wrapping portion 420 is located between the second side wall 320 and the third side wall, and the second side wall 320 and the third side wall can limit the first wrapping portion 420.

It should be noted that, when substances such as water or dust enter the first receptacle 130 from outside the photovoltaic connector 1300, a triple sealing protection line of the photovoltaic connector 1300 needs to be performed. A first sealing protection line is that the end face that is of the second side wall 320 and that faces away from the top wall 310 is in a sealed connection to the end face of the boss 140, to prevent the substances such as water or dust from entering the first receptacle 130. A second sealing protection line is that the second sealing kit 500 is connected between the end face of the second side wall 320 and the end face of the boss 140, to prevent the substances such as water and dust from entering the first receptacle 130. A third protection line is that the first sealing kit 400 is connected between the first side wall 120 and the inner surface of the top wall 310, to prevent the substances such as water and dust from entering the first receptacle 130. The first side wall 120 protrudes from the end face of the boss 140 along a direction close to the cover body 300, so that the end face that is of the first side wall 120 and that faces away from the bottom wall 110 and the end face of the boss 140 are not in a same plane. In addition, the first side wall 120 is connected to the inner surface of the top wall 310 via the first sealing kit 400, and the second side wall 320 is connected to the end face of the boss 140 via the second sealing kit 500. Because the first side wall 120 has a specific height size, the end face of the boss 140 and the inner surface of the top wall 310 are not in a same plane. Therefore, it can be learned that the second protection line and the third protection line of the photovoltaic connector 1300 are not on a same plane. When the photovoltaic connector 1300 is exposed to rainwater outdoors, it is difficult for the rainwater to penetrate the protection lines on the two different planes of the photovoltaic connector 1300 and enter the first receptacle 130. This can improve waterproof performance of the photovoltaic connector 1300.

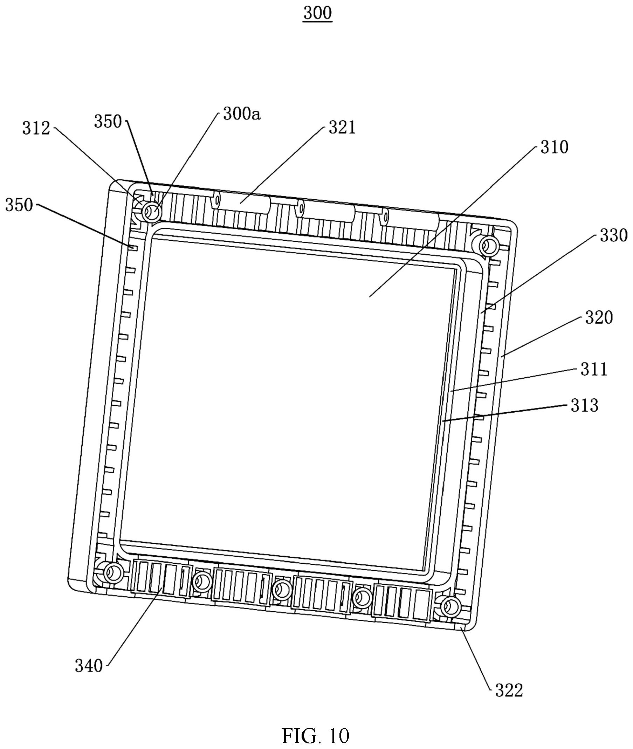

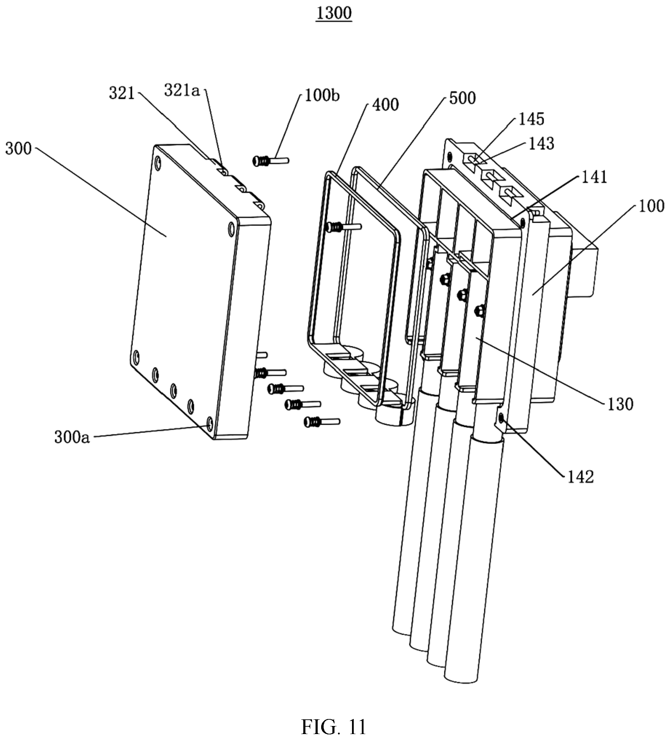

In an implementation, as shown in FIG. 10 to FIG. 14, a first trench 311 is disposed on the inner surface of the top wall 310, and the first sealing body 410 is disposed in the first trench 311. Specifically, the first wrapping portion 420 extends out of the first trench 311 and is located on the first concave portion 340. The first trench 311 can limit the first sealing kit 400, and improve stability of connections between the first sealing kit 400 and the cover body 300 and the case 100. It should be noted that a limiting rib 313 protrudes from the inner surface of the top wall 310, the limiting rib 313 is enclosed into a circle, and the limiting rib 313 is located in encirclement of the third side wall 330. There is a gap between the limiting rib 313 and the third side wall 330. The limiting rib 313, the third side wall 330, and the inner surface of the top wall 310 are enclosed to form the first trench 311. The first sealing body 410 is located in the first trench 311 and can be closely in contact with a surface that is of the third side wall 330 and that faces away from the second side wall 320.

In an implementation, a second trench 141 is disposed on the end face of the boss 140, the second trench 141 accommodates the first sealing body 410, and the second trench 141 can limit the second sealing kit 500. This improves stability of connections between the second sealing kit 500 and the cover body 300 and the case 100. It should be noted that the end face of the boss 140 is concave in a direction away from the cover body 300 to form the second trench 141, and the second sealing body 510 in the second trench 141 is closely in contact with the first side wall 120. It should be noted that, the first sealing kit 400 is closely connected to the end face that is of the first side wall 120 and that is away from the bottom wall 110, and is in contact with a surface that is of the third side wall 330 and that faces away from the second side wall, the second sealing kit 500 is closely in contact with an end face that is of the third side wall 330 and that faces away from the top wall 310, and the second sealing kit 500 is closely in contact with the first side wall 120. It can be learned that the first sealing kit 400, the second sealing kit 500, the first side wall 120, and the third side wall 330 can be enclosed to form sealing space, the sealing space can improve sealing performance between the case 100 and the cover body 300, and further improve waterproof and dustproof performance of the photovoltaic connector 1300.

A protrusion 321 is disposed on an end face that is of the second side wall and that faces away from the top wall 310, and a first hinge hole 321a is disposed on the protrusion 321. The boss 140 is provided with a groove 143, and the groove 143 is used for the protrusion 321 to extend into. Specifically, the end face of the boss 140 is concave in a direction away from the cover body 300 to form the groove 143, the boss 140 is further provided with a second hinge hole 144, the second hinge hole 144 communicates with the groove 143, and a pin 145 passes through the first hinge hole 321a and the second hinge hole 144. It may be understood that, the second side wall is hinged to the boss 140 via the pin 145, and the cover body 300 may be turned over relative to the case 100. For example, when the cable 600 is connected to the terminal 200, the cover body 300 may be turned over to be in an open state, to facilitate a connection between the cable 600 and the terminal 200. After the cable 600 is connected to the terminal 200, the cover body 300 is turned over to close the cover body 300, and the cover body 300 is in a sealed connection to the case 100. It should be noted that there may be a plurality of protrusions 321, each protrusion 321 is provided with one first hinge hole 321a, the boss 140 may be provided with grooves 143 whose quantity is the same as the quantity of protrusions 321, and the protrusion 321 one-to-one correspond to the groove 143.

In an implementation, an end face that is of the second side wall and that faces away from the top wall 310 is concave in a direction away from the boss 140 to form a drainage groove 322. There may be a plurality of drainage grooves 322. The drainage groove 322 communicates with a gap between the second side wall and the third side wall 330, and the drainage groove 322 can discharge accumulated water between the second side wall 320 and the third side wall 330 to the photovoltaic connector 1300. For example, the photovoltaic connector 1300 can be used outdoors. When rain or the like occurs outdoors, although the end face that is of the second side wall 320 and that faces away from the top wall 310 is in a sealed connection to the end face of the boss 140, rainwater may still enter the gap between the second side wall 320 and the third side wall 330 from the gap between the second side wall 320 and the end face of the boss 140. Water accumulated in the gap between the second side wall 320 and the third side wall 330 is discharged via the drainage groove 322, to reduce a possibility that sealing performance of the second sealing kit 500 is affected due to water accumulated in the gap between the second side wall 320 and the third side wall 330, so as to improve waterproof performance of the photovoltaic connector 1300

In an implementation, as shown in FIG. 10, a protruding column 312 protrudes from the inner surface of the top wall 310, there may be a plurality of protruding columns 312, the protruding column 312 is located in the gap between the second side wall 320 and the third side wall 330, an end face that is of the protruding column 312 and that faces away from the top wall 310 abuts against the end face of the boss 140, a first fastening hole 300a penetrating the top wall 310 and the protruding column 312 is disposed on the cover body 300, and a second fastening hole 142 corresponding to the first fastening hole 300a is disposed on the boss 140, a fastener passes through the first fastening hole 300a, the fastener extends into the second fastening hole 142, and the fastener may be a captive screw. A plurality of reinforcing ribs 350 are disposed in the gap between the second side wall 320 and the third side wall 330, the second side wall 320 can be connected to the protruding column 312 via the reinforcing rib 350, the third side wall 330 can be connected to the protruding column 312 via the reinforcing rib 350, and the second side wall 320 can be further connected to the third side wall 330 via the reinforcing rib 350. Because the protruding column 312 is disposed between the second side wall 320 and the third side wall 330, space of the cover body 300 occupied by matching the fastener and the first fastening hole 300a of the protruding column 312 can be saved; and because the boss 140 is provided with the second fastening hole 142 matched to the fastener, additional space occupied by the fastener matched to the case 100 can be saved.

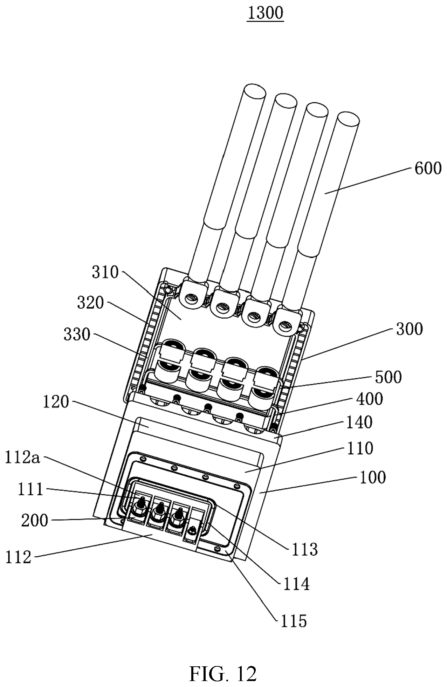

In an implementation, as shown in FIG. 12 to FIG. 14, a first through hole 111 is disposed on the bottom wall 110 of the case 100, a plug portion 112 surrounding the first through hole 111 protrudes from an outer surface of the bottom wall 110, and the outer surface of the bottom wall 110 is a surface that is of the bottom wall 110 and that faces away from the cover body 300. The plug portion 112 is provided with a second receptacle 112a, the first through hole 111 communicates with the first receptacle 130 and the second receptacle 112a, and a part that is of the terminal 200 and that extends out of the first receptacle 130 is accommodated in the second receptacle 112a. The plug portion 112 surrounds the part that is of the terminal 200 and that extends out of the first receptacle 130. The plug portion 112 can protect the terminal 200. A structure of the plug portion 112 adapts to a structure of the through groove 1120. The plug portion 112 can extend into the accommodating cavity 1110 through the through groove 1120. A part that is of the terminal 200 and that is located in the second receptacle 112a penetrates the through groove 1120, and is electrically connected to the circuit board 1200 in the accommodating cavity 1110.

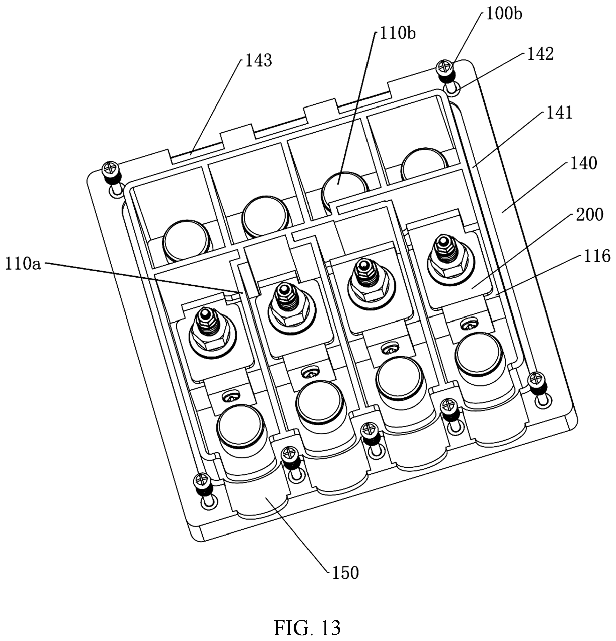

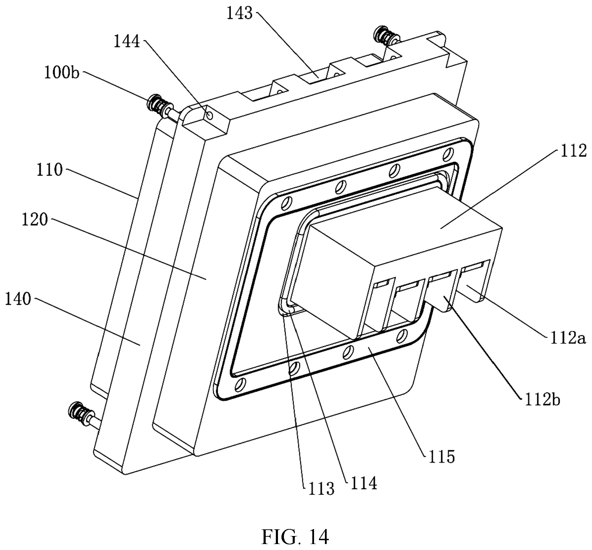

In this application, as shown in FIG. 13 and FIG. 14, there may be a plurality of terminals 200, the plurality of terminals 200 are spaced from each other, a plurality of first spacer plates 110a are disposed on the inner surface of the bottom wall 110, and the first spacer plate 110a is configured to separate two adjacent terminals 200 of the plurality of terminals 200. The plug portion 112 is provided with a plurality of second spacer plates 112b, and the second spacer plate 112b is configured to separate two adjacent terminals 200 in the plurality of terminals 200. For example, the inverter 1000 outputs three-phase electricity via the photovoltaic connector 1300, and there are four terminals 200 in the photovoltaic connector 1300. Three terminals 200 are respectively connected to three phase lines of the circuit board 1200, remaining one terminal 200 is configured to be connected to a neutral line of the circuit board 1200, and four cables 600 extend into the first receptacle 130 are respectively connected to the four terminals 200. It may be understood that the inverter 1000 can transmit a three-phase alternating current via the photovoltaic connector 1300.

In an implementation, as shown in FIG. 13, a mounting table 116 protrudes from a surface that is of the bottom wall 110 and that faces the cover body 300, and a part that is of the terminal 200 and that is located in the first receptacle 130 is fastened to the mounting table 116. Specifically, the part that is of the terminal 200 and that is located in the first receptacle 130 is fastened on the mounting table 116 via a stud. When the terminal 200 is connected to the cable 600, the cable 600 is in contact with the terminal 200, and a nut is screwed with the stud and abuts against the cable 600, so that the cable 600 and the terminal 200 can be electrically connected stably.

As shown in FIG. 14, a third trench 113 surrounding the plug portion 112 is disposed on the surface that is of the bottom wall 110 and that faces away from the cover body 300, a third sealing kit 114 is disposed on the third trench 113, and the third sealing kit 114 is in contact with a surface that is of the plug portion 112 and that faces away from the second receptacle 112a. The third sealing kit 114 is a bonding sealing rubber strip, and the third sealing kit 114 can be closely in contact with the outer surface of the box body 1100. This can improve sealing performance of the photovoltaic connector 1300 and the box body 1100. The third trench 113 can limit the third sealing kit 114. This improves connection stability between the third sealing kit 114 and the case 100.

In an implementation, the photovoltaic connector 1300 further includes a fourth sealing kit 115, the fourth sealing kit 115 is closely attached to the surface that is of the bottom wall 110 and that faces away from the cover body 300, and the fourth sealing kit 115 surrounds the third sealing kit 114. The fourth sealing kit 115 is a bonding sealing rubber strip. The fourth sealing kit 115 is fastened to the case 100 via a connecting piece (not shown in the figure). There are a plurality of connecting pieces. Each connecting piece penetrates the fourth sealing kit 115 and the bottom wall 110. A part of the connecting piece that extends into the first receptacle 130 is connected to the blocking element 110b. There is a specific spacing between the blocking element 110b and the terminal 200 located in the first receptacle 130.

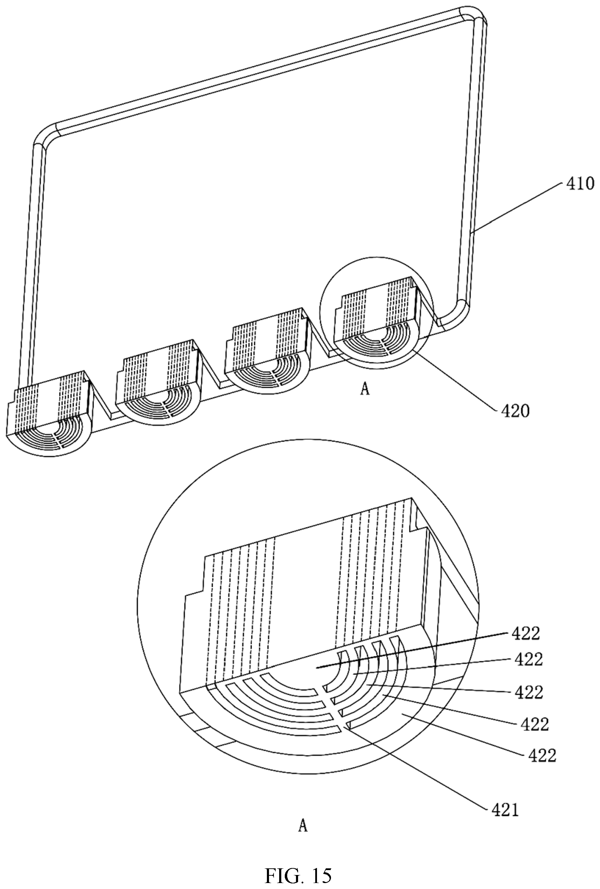

In an implementation, as shown in FIG. 15, the first wrapping portion 420 includes a first connection portion 421 and a plurality of first wrapping layers 422 spaced from each other along a radial direction of the second through hole 1300a, and the first connection portion 421 is connected to the plurality of first wrapping layers 422. The first wrapping layers 422 in the first wrapping portion 420 can be torn off layer by layer. Specifically, the first wrapping layer 422 may be torn off along a dashed line in FIG. 15, so that a sealing structure including the first wrapping portion 420 and the second wrapping portion 520 easily adapts to a diameter of the cable 600.

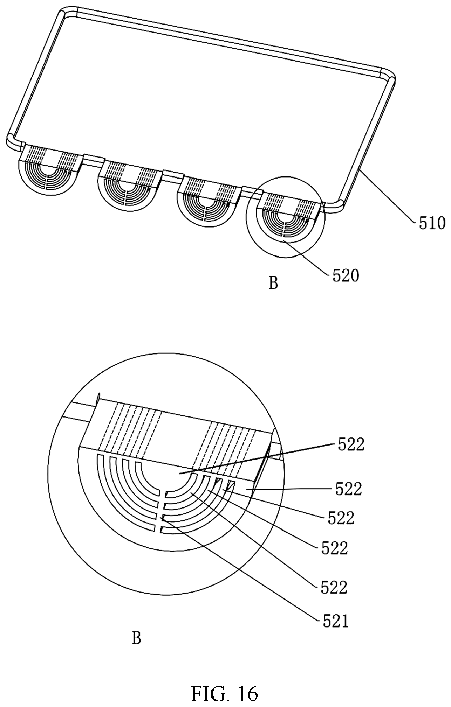

As shown in FIG. 16, the second wrapping portion 520 includes a second connection portion 521 and a plurality of second wrapping layers 522 spaced from each other along a radial direction of the second through hole 1300a. The second connection portion 521 is connected to the plurality of second wrapping layers 522. The first wrapping layer 422 and the second wrapping layer 522 are disposed opposite to each other, to wrap the cable 600. The plurality of second wrapping layers 522 can be torn off one layer by one. Specifically, the second wrapping layer 522 may be torn off along a dashed line in FIG. 16, so that a sealing structure enclosed by the second wrapping portion 520 can adapt to cables 600 of different diameters. Specifically, if the cable 600 of the cable 600 is large, and the first wrapping portion 420 and the second wrapping portion 520 cannot wrap the cable 600, one or more first wrapping layers 422 may be torn off from the first wrapping portion 420. In this case, one or more second wrapping layers 522 may be torn off from the second wrapping portion 520, to tightly wrap the cable 600. Generally, a quantity of first wrapping layers 422 torn off from the first wrapping portion 420 is the same as a quantity of second wrapping layers 522 torn off from the second wrapping portion 520. Several first wrapping layers 422 are to be torn off from the first wrapping portion 420, and/or several second wrapping layers 522 are to be torn off from the second wrapping portion 520, to adapt to wrapping cables 600 of different diameters.

In this application, unless otherwise specified and limited, terms "connection", "fastening", and the like should be understood in a broad sense. For example, "fastening" may be a fastened connection, a detachable connection, or an integrated connection; may be a mechanical connection, or may be an electrical connection; or may be a direct connection, or may be an indirect connection via an intermediate medium, or may be a connection inside two elements or an interaction relationship between two elements, unless otherwise specified. A person of ordinary skill in the art may interpret specific meanings of the foregoing terms in this application according to specific cases.

The first, the second, and various numbers in this specification are used for differentiation only for ease of description, instead of limiting the scope of this application.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

The foregoing embodiments are only intended for describing the technical solutions of this application, rather than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A photovoltaic connector, comprising a case, a cover body, and a terminal, wherein the case and the cover body are enclosed to form a first receptacle, the cover body is provided with a first concave portion, the case is provided with a first through hole, a part of the terminal is located in the first receptacle, and a part of the terminal extends out of the first receptacle through the first through hole; and the case is further provided with a second concave portion, and the first concave portion and the second concave portion are enclosed to form a second through hole communicating with the first receptacle;
a first sealing kit is disposed on a surface that is of the cover body and that faces the case, the first sealing kit is connected to the case, the first sealing kit comprises a first sealing body and a first wrapping portion that are connected, and the first wrapping portion is disposed on the first concave portion; and
a second sealing kit is disposed on a surface that is of the case and that faces the cover body, the second sealing kit is connected to the cover body, the second sealing kit comprises a second sealing body and a second wrapping portion that are connected, the second wrapping portion is disposed on the second concave portion, the first wrapping portion and the second wrapping portion are enclosed to form a sealing structure used to wrap a cable, and the cable is configured to extend into the first receptacle from the second through hole, to connect to the terminal.

2. The photovoltaic connector according to claim 1, wherein the case comprises a bottom wall and a first side wall surrounding the bottom wall, the first side wall is connected to an inner surface of the bottom wall, a boss protrudes from an outer surface of the first side wall, and the boss surrounds the first side wall; and
the cover body comprises a top wall and a second side wall surrounding the top wall, the second side wall is connected to an inner surface of the top wall, the inner surface of the top wall is closely connected, via the first sealing body, to an end face that is of the first side wall and that faces away from the bottom wall, and an end face that is of the second side wall and that faces away from the top wall is connected to an end face of the boss.

3. The photovoltaic connector according to claim 2, wherein the photovoltaic connector further comprises a third side wall connected to the inner surface of the top wall, the third side wall surrounds the first side wall, the third side wall is located in encirclement of the second side wall, there is a gap between the third side wall and the second side wall, and an end face that is of the third side wall and that faces away from the top wall is closely connected to the end face of the boss via the second sealing body.

4. The photovoltaic connector according to claim 3, wherein a first trench is disposed on the inner surface of the top wall, the first trench accommodates the first sealing body, and the first sealing body is in contact with a surface that is of the third side wall and that faces away from the second side wall.

5. The photovoltaic connector according to claim 2, wherein a second trench is disposed on the end face of the boss, the second trench accommodates the second sealing body, and the second sealing body is in contact with a surface that is of the first side wall and that faces away from the first receptacle.

6. The photovoltaic connector according to claim 1, wherein the first wrapping portion comprises a first connection portion and a plurality of first wrapping layers spaced from each other along a radial direction of the second through hole, and the first connection portion is connected to the plurality of first wrapping layers.

7. The photovoltaic connector according to claim 6, wherein the second wrapping portion comprises a second connection portion and a plurality of second wrapping layers spaced from each other along a radial direction of the second through hole, the second connection portion is connected to the plurality of second wrapping layers, and the first wrapping layer and the second wrapping layer are disposed opposite to each other, to wrap the cable.

8. The photovoltaic connector according to claim 2, wherein the first through hole is disposed on the bottom wall, a plug portion surrounding the first through hole protrudes from a surface that is of the bottom wall and that faces away from the first receptacle, a second receptacle is disposed on the plug portion, the first through hole communicates with the first receptacle and the second receptacle, and a part that is of the terminal and that extends out of the first receptacle is located in the second receptacle.

9. The photovoltaic connector according to claim 8, wherein a third groove surrounding the plug portion is disposed on a surface that is of the bottom wall and that faces away from the cover body, a third sealing kit is disposed on the third groove, and the third sealing kit is in contact with a surface that is of the plug portion and that faces away from the second receptacle.

10. The photovoltaic connector according to claim 9, wherein the photovoltaic connector further comprises a fourth sealing kit, the fourth sealing kit is fastened to the surface that is of the bottom wall and that faces away from the cover body, and the fourth sealing kit surrounds the third sealing kit.

11. The photovoltaic connector according to claim 2, wherein a mounting table protrudes from a surface that is of the bottom wall and that faces the cover body, and a part that is of the terminal and that is located in the first receptacle is fastened to the mounting table.

12. The photovoltaic connector according to claim 2, wherein a protrusion is disposed on the second side wall, a first hinge hole is disposed on the protrusion, a groove is disposed on the end face of the boss, a second hinge hole communicating with the groove is disposed on the boss, the protrusion extends into the groove, and a pin passes through the first hinge hole and the second hinge hole.

13. The photovoltaic connector according to claim 3, wherein the end face that is of the second side wall and that faces away from the top wall is concave in a direction away from the boss, to form a drainage groove, and the drainage groove communicates with the gap between the second side wall and the third side wall.

14. The photovoltaic connector according to claim 3, wherein a protruding column protrudes from the inner surface of the top wall, the protruding column is located in the gap between the second side wall and the third side wall, an end face that is of the protruding column and that faces away from the top wall abuts against the end face of the boss, a first fastening hole penetrating the top wall and the protruding column is disposed on the cover body, a second fastening hole corresponding to the first fastening hole is disposed on the boss, a fastener passes through the first fastening hole, and the fastener extends into the second fastening hole.

15. An inverter, wherein the inverter comprises a box body, a circuit board, and the photovoltaic connector according to any one of claims 1 to 14, the box body has an accommodating cavity and a through groove communicating with the accommodating cavity, the accommodating cavity accommodates the circuit board, a case of the photovoltaic connector is located outside the box body, and a terminal of the photovoltaic connector extends into the accommodating cavity through the through groove, and is electrically connected to the circuit board.
